Europäisches Patentamt

European Patent Office

Office européen des brevets

(19)

(11) EP 1 566 710 A1

## (12) EUROPEAN PATENT APPLICATION

(43) Date of publication:
24.08.2005 Bulletin 2005/34

(51) Int Cl.7: **G05B 13/04**, G05D 19/02

(21) Application number: 05003392.7

(22) Date of filing: 17.02.2005

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **20.02.2004 JP 2004045156**

(71) Applicant: **AISIN SEIKI KABUSHIKI KAISHA Aichi-ken 448-8650 (JP)**

(72) Inventors:
• **Mizushima, Daichi Intellectual Property Dept. Kariya-shi Aichi-ken, 448-8650 (JP)**
• **Fushimi, Takehiko Intellectual Property Dept. Kariya-shi Aichi-ken, 448-8650 (JP)**

(74) Representative: **Kramer - Barske - Schmidtchen Radeckestrasse 43 81245 München (DE)**

## (54) Method of generating action control data and method of adaptable map control

(57) A method of generating action control data includes an actuator (2) as a control object, a detector (s3) for detecting an actual measured data of an action signal in the actuator, and a data map including control data which can perform a preferable condition of control by activating the actuator. The method of generating action control data for activating the actuator in accordance with a driving condition appropriate at a time of controlling on the basis of an appropriate control data (MAP_amp, MAP_ph, MAP_Im) selected from the data map is characterized in that the method of generating action control data (amp, ph, Im) includes the steps of calculating (C11) a deviation between the appropriate control data and an actual measured data (Re_amp, Re_ph, Re_Im), modifyng (C12) the appropriate control data on the basis of calculated deviation(ΔAMP, ΔPH, ΔIm), and generating (C8) the modified appropriate control data as the action control data.

FIG. 1

**Description**

FIELD OF THE INVENTION

This invention generally relates to a control method for operating an actuator to perform a predetermined control condition. More particularly, for purposes of performing such a control method, the present invention relates to a method of generating action control data for sending to the actuator. Even more particularly, the present invention relates to a method of generating action control data incorporating the actuator to be controlled; a detector for detecting either actual data concerning a degree of control, or alternatively a control signal for the actuator; and a data map containing control data that, by setting the actuator into operation, create favorable conditions of control appropriate to each of various driving conditions; by setting the actuator into operation, and by operating the actuator on the basis of appropriate control data, each selected from the data map. The invention also relates to a control method according to which the action control data generated by the above-mentioned method can be utilized.

BACKGROUND

In general terms, a control method, generally referred to as a map control, includes a data map containing control data that facilitate favorable conditions of a vehicle control by means of setting the actuator into operation. In the map control, on the basis of items of input information regarding an operation conditions, an item of a control data, appropriate to the relevant driving condition (the control data are called appropriate control data) is selected and identified. The appropriate control data identified are themselves, without modification, to operate the actuator.

According to JPH11-259147A, the data map is prepared in advance so as to be capable of handling every kind of driving condition. For example, the data map is generated by putting together into the map control data, which, by use of a control system juxtapositionally with the map control system at appropriate interval of time.

Because in the map control, a data map prepared in advance is generally used, the map control excels in terms of responsiveness. However, there is a limit to the number of maps that can be stored, and accordingly the method can also be considered to have the inherent disadvantage of not being sufficiently adaptable. In order to overcome this problem, maps that can take into account an extremely large number of potential driving condition must be prepared in advance. Accordingly, for example, an active vibration isolating system, designed for the purpose of attenuating vehicle vibration, and provided in a vehicle employing an active mount structure, can not cope adequately with a vibrator which has been influenced by a change of temperature, or by changes in the characteristics of the system over a period of time.

On the other hand, regarding active vibration isolation of a vehicle, JP2003-113892A describes a method for controlling a vibrator. In this method, a crank pulse is read by a crank pulse sensor provided at an engine for the purpose of calculating an engine torque, and then calculating an amplitude of engine vibration. If the amplitude calculated is less than a predetermined value, a vibrator provided at an active mount is controlled on the basis of the amplitude calculated, and a phase predetermined in advance. If the amplitude is a predetermined value or more, a phase of the engine vibration is calculated from a phase of maximum torque. Then, the vibrator is controlled on the basis of the calculated amplitude and the calculated phase.

As described above, in the implementation of a conventional map control, the adaptability of the system is inadequate. In cases where factors influencing control are various, it is impossible to obtain map data of an order that will produce a satisfactory control effect. Further, if the intention is to prepare a data map that will take due account of temperature changes, or of chances that tend to occur naturally over a period of time, when an attempt is made to prepare a data map that takes all these kinds of factors into account, the number of data required for the data map becomes excessive. At the same time, because it is difficult to foresee all these kinds of changes required for the data map becomes excessive, a system of map control that is based on an assumption that maps should be prepared in advance is in itself fundamentally flawed.

Further, when one takes into consideration the active vibration isolation of a vehicle, because in the technique described in US2003-030203A1 both an assumed value and a set value are used, if an error leads to a discrepancy between, on the one hand, the assumed value or the set value, and on the other hand, an actual amplitude or an actual phase, or, if a discrepancy appears in the natural course of events, it will not always be possible to secure active vibration isolation.

A need thus exists for a method of generating and controlling action control data for an active vibration isolating system, by which a map control can be performed to an outstanding level in terms of both the responsiveness of the system to meet a variety of applications, and with which system, even in circumstances where the system can be equipped with only a limited number of data maps, it is possible for the system to cope, in a satisfactory manner, with changes such as changes in temperature, and changes that tend to occur naturally with the passage of time. The present invention has been made in view of the above circumstances and provides such a method.

## SUMMARY OF THE INVENTION

According to an aspect of the present invention, a method of generating action control data includes an actuator (2) as a control object, a detector (s3) for detecting an actual measured data of an action signal in the actuator, and a data map including control data which can perform a preferable condition of control by activating the actuator. The method of generating action control data for activating the actuator in accordance with a driving condition appropriate at a time of controlling on the basis of an appropriate control data (MAP_map, MAP_ph, MAP_Im) selected from the data map is characterized in that the method of generating action control data (amp, ph, Im) includes the steps of calculating (C11) a deviation between the appropriate control data and an actual measured data (Re_amp, Re_ph, Re_Im), modifying (C12) the appropriate control data on the basis of calculated deviation ($\Delta$AMP, $\Delta$PH, $\Delta$Im), and generating (C8) the modified appropriate control data as the action control data.

According to a further aspect of the present invention, by utilizing a response of a map control, and by supplementing a drawback of the map control robustness, in particular, lack of robustness, satisfactory performance in isolation of vibration was achieved. Then, for an active vibration isolating control system, in case the control method is utilized, because assumed value is not used in calculations, an error from the actual measured value is not generated. Thus, satisfactory performance in isolation of vibration can be obtained. Because the appropriate control data, which enables to perform preferable control for the driving condition, is slightly modified by reference of the actual detected value, satisfactory performance in isolation of vibration can be obtained without losing satisfactory response. Because a deviation between the optimum value and the actual measured value is calculated, the deviation can be canceled in case where a deviation be generated between the value optimized in past, which becomes not optimum value with passage of time, or the like, and the actual measured value. Further, in case where a deviation be calculated, and modification be performed by use of the deviation, the filter coefficient, if provided, can be set or changed for adjusting the amount of the modification. Thus, the satisfactory control can be easily performed.

## BRIEF DESCRIPTION OF THE DRAWINGS

The foregoing and additional features and characteristics of the present invention will become more apparent from the following detailed description considered with reference to the accompanying drawings, wherein:

Fig. 1 is a block view schematically illustrating a structure of an active vibration isolation control system 1 whereby a control method according to an embodiment of the present invention is performed;

Fig. 2 is a sectional view illustrating a cross section of an engine mount attached with a vibrator serving as a controlled object according to the embodiment of the present invention;

Fig. 3 is a block view schematically illustrating a system for performing an adaptable map control according to the embodiment of the present invention;

Fig. 4 is a block view schematically illustrating a control algorithm for performing an adaptive control according to the embodiment of the present invention;

Fig. 5 is a block view schematically illustrating an algorithm for generating and setting data maps, which are needed for performing the adaptable map control, during implementing the adaptive control; and

Fig. 6 is a flowchart for explaining generation and setting of data maps carried out by a data map setting unit according to the embodiment of the present invention.

## DETAILED DESCRIPTION

An embodiment of the present invention will be described hereinbelow in detail with reference to the accompanying drawings. Certain terminology is used herein for convenience only and is not to be taken as a limitation on the invention. For example, words such as "upper", "lower", "left", "right", "horizontal", "vertical", "upward", "downward", "clockwise", and "counter-clockwise" merely describe the configuration shown in the Figures. An active vibration isolation control system 1 according to the embodiments of the present invention possesses a control structure effective for selectively determining a control method between an adaptable map control and an adaptive control. The adaptable map control characteristic to the present invention represents a control by use of numerical tables. The active vibration isolation control system 1 generates, during implementation of the adaptive control, data maps incorporated with parameter values that appear in an event that vibration have been effectively isolated.

1. Active mount control system

1-1 Overall Structure

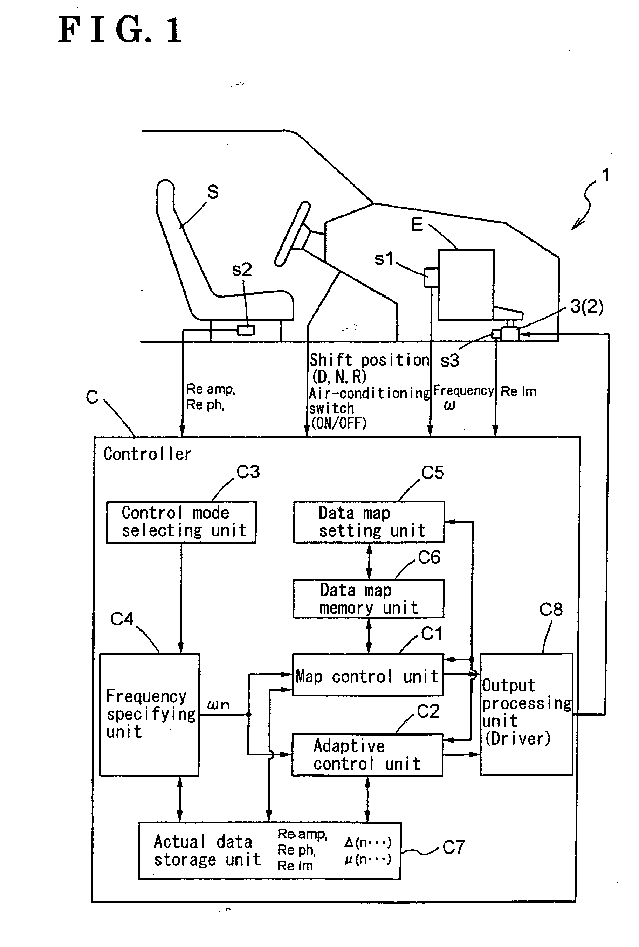

In general, vibration, which emanate from an engine E serving as a vibration-producing source, may be transmitted to a seat S (i.e., vehicle specific position) illustrated in Fig. 1. The active vibration isolation control system 1 according to the embodiment of the present invention is mounted on a vehicle, inter alia, for the purpose of inhibiting vibration of the engine E from causing discomfort to a vehicle driver or occupant. In the active vibration isolation control system 1, a vibrator 2 is attached at an engine mount 3 supporting the engine E mounted thereon. By operating the vibrator 2 in a proper manner on the basis of output of command signals from a control device C, it is possible to secure predetermined effects in isolating vibration.

As illustrated in Fig. 1, the control device C incorporates, therein, a map control unit C1 adapted to perform the adaptable map control, and an adaptive control unit C2 capable of performing the adaptive control.

1-2 Detecting System

The active vibration isolation control system 1 is further provided with a rotational detector s1 for detecting an engine rotational frequency of the engine E, a pickup acceleration sensor s2 equipped at a bottom portion of the seat S and a current detector s3 for detecting current actually supplied to the vibrator 2. As the rotational detector s1, detectors, such as a rotational speed sensor for detecting a rotational frequency of a crankshaft in the form of pulses, and a signal transmitting system for transmitting an ignition pulse signal, are represented. In the active vibration isolation control system 1 with the aforementioned configuration, at least following factors can be detected: a frequency $\omega$ representing an engine rotational frequency, a frequency detected by the rotational detector s1; actual vibration at the bottom portion of the seat S, actual vibration detected by the pickup acceleration sensor s2; and a value of current actually supplied to the vibrator 2, a value of current detected by the current detector s3. The actual vibration at the bottom portion of the seat S is expressed in terms of voltage and is denoted by actual amplitude Re_amp and actual phase Re_ph. The value of current actually supplied to the vibrator 2 is expressed in terms of electric current and is denoted by actual current amplitude Re__Im. These factors are fed into the control device C and recognized therein.

Input into the control device C also includes shift positions in a transmission (not shown), shift positions such as a forward shift position D, a neutral shift position N and a reverse shift position R, and on-and-off states of an air-conditioning switch (not shown).

Therefore, on the basis of a given engine rotational frequency $\omega$, any shift position (D, N and R) and any on-and-off state of the air-conditioning switch, a current vehicle driving condition, i.e., a vehicle driving condition at a time when either the adaptive control or the adaptable map control is implemented, can be identified and specified.

In this active vibration isolation control system 1, the engine rotational frequency $\omega$ is employed so as to selectively determine, as the control method, either the adaptable map control or the adaptive control, and is further employed so as to specify a specific frequency $\omega n$ which is referred to for the purpose of effectively setting in motion an active control for isolating vibration.

Meanwhile, on the basis of the engine rotational frequency $\omega$, specifically the specific frequency $\omega n$, any shift position (D, N and R) and any on-and-off state of the air-conditioning switch, when the adaptable map control is performed, appropriate control data can be selected and specified from among data maps.

1-3 Engine Mount

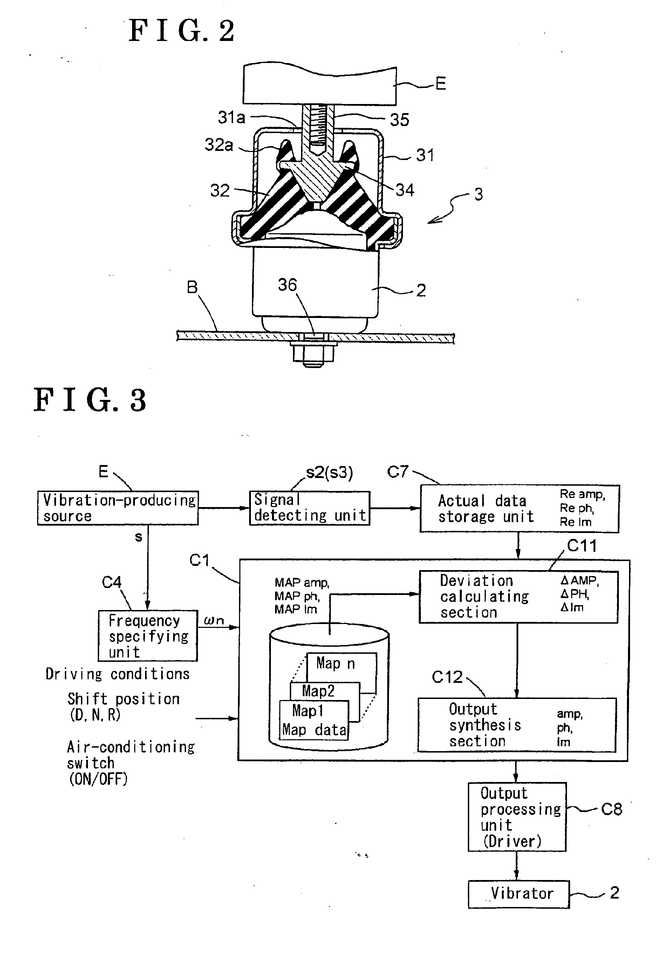

The engine mount 3 is a so-called mount attached with a vibrator and serves as an active mount. As is apparent from Fig. 2, in the engine mount 3, a vibration-isolating rubber 32 and the vibrator 2 are housed in an approximately cylindrically shaped case 31. The vibrator 2, which is an electro-magnetically driven-type actuator, is positioned below the vibration-isolating rubber 32. A bottom portion of the vibration-isolating rubber 32 is fixed at an inner wall of the case 31, while an upper portion thereof is attached to a fixing bracket 34. The vibration-isolating rubber 32 is integrally provided with a stopper portion 32a, which extends in a direction of one end of the case 31, i.e., upward in Fig. 2, in such a manner as to accommodate the fixing bracket 34 therein.

A fixing shaft 35 is placed at an approximately axially central position at an upper side of the fixing bracket 34, as seen in Fig. 2. A tip end of the fixing shaft 35 projects through a penetrating hole 31a defined at one upper side of the case 31. A hole diameter of the penetrating hole 31a is designed to be superior to an axial diameter of the fixing shaft 35, thereby effectively avoiding interference between the case 31 and the fixing shaft 35. Meanwhile, at a lower side of the case 31, a fixing shaft 36 is provided.

The engine mount 3 is fixedly mounted at a vehicle body B by means of the fixing shaft 36. The Engine mount 3 supports the engine E fixed at the fixing shaft 35. As a result, by activating, on the basis of the output of commands from the control device C, the vibrator 2 at a degree commensurate with the level of vibration transmitted to the fixing bracket 34 from the engine E, i.e., by activating the vibrator 2 at a degree so as to offset or counteract vibration transmitted to the fixing bracket 34 from the engine E, it is possible to reduce the extent of the influence of vibration to be imposed on the seat S.

1-4 Control Device

The control device C incorporates a generally used central processing unit (abbreviated to CPU), the map control unit C1 and the adaptive control unit C2. As illustrated in Fig. 1, the control device C further incorporates a control method determining unit C3, a frequency specifying unit C4, a data map setting unit C5, a data map memory unit C6, an actual data storage unit C7 and an output processing unit C8.

Control Method Determining Unit C3

The control method determining unit C3 selectively determines, on the basis of the engine rotational frequency $\omega$, as the appropriate control method, either the adaptable map control or the adaptive control. In detail, when the engine rotational frequency $\omega$ is equal to, or less than, a predetermined frequency, the map control unit C1 is operated, as a primary control unit, for the purpose of carrying out the adaptable map control. On the other hand, when the engine rotational frequency $\omega$ is superior to the predetermined frequency, the adaptive control unit C2 is operated, as a primary control unit, for carrying out the adaptive control. According to the embodiment of the present invention, the predetermined frequency is set, as a non-limiting example, preferably substantially at 50Hz.

Frequency Specifying Unit C4

Irrespective of whether the control method adopted at the time is, the adaptable map control or the adaptive control, the frequency specifying unit C4 specifies, as the specific frequency $\omega n$, a frequency to be controlled, i.e., a frequency which is considered to possess the potential to produce the best effect, i.e., the potential to produce the best control results. Further, the frequency specifying unit C4 feeds a signal representing this specific frequency $\omega n$ to the downstream control system. Here, the specific frequency $\omega n$ is referred to as a value included in the specific frequency range to be controlled. In concrete terms, in consideration of the engine rotational frequency $\omega$, in manner of pulses, detected by the rotational detector s1, the frequency specifying unit C4 specifies, as the specific frequency $\omega n$, a frequency which is considered to be most effective for implementing an active vibration isolation control. Moreover, the frequency specifying unit C4 feeds a signal representing this specific frequency $\omega n$ in manner of a sine wave to the downstream control system.

Data Map Setting Unit C5

The data map setting unit C5 acts to generate and set, initially, or as appropriate, data maps required for implementing the adaptable map control. The data map, which is generated and set on the basis of the vehicle driving condition, is memorized at the data map memory unit C6, and is employed when the adaptable map control is carried out.

Data Map Memory Unit C6

The data map memory unit C6 has memorized in advance control data (either voltage amplitude or electric current amplitude, and phase) to be output to the vibrator 2, control data whereby vibration attenuation can be preferably secured at the seat S. The amplitude, either voltage amplitude or electric current amplitude, is mapped in accordance with plural engine rotational frequencies w , shift positions (D, N and R) and on-and-off states of the air-conditioning switch, and likewise each phase thereof is mapped. When the adaptable map control is carried out, appropriate control data (MAP_amp, MAP_ph and MAP_Im) is selected and determined, in response to an actual vehicle driving condition, from among the predetermined control data. Namely, the appropriate control data (MAP_amp, MAP_ph and MAP_Im) represents control data appropriate to the circumstances at that time.

Actual Data Storage Unit C7

The actual data storage unit C7 stores the current engine rotational frequency $\omega$ detected by the rotational detector s1, actual amplitude Re_amp and the actual phase Re_ph, both detected by the pickup acceleration sensor s2, and the actual current amplitude Re_Im detected by the current detector s3. Moreover, the actual data storage unit

**EP 1 566 710 A1**

C7 stores a current deviation Δ and past deviations Δ(n-1, n-2...), and a current modification filter coefficient μ and past modification filter coefficients μ(n-1, n-2...). The modification filter coefficient μ is employed when modified appropriate control data is needed, in consideration with the deviation Δ. The modification filter coefficient μ can be variable. In such case, it is possible to select and employ a filter coefficient appropriate to a vehicle driving condition when the appropriate control data is required to be modified, whereby preferable control can be implemented.

Output Processing Unit C8

The output-processing unit C8 is a driver adapted to transform the modified, appropriate control data to a signal form that can suit to an operation of the vibrator 2.
Next, the following is an explanation of the adaptable map control, the adaptive control and generation of data, map during the course of the adaptive control.

1-4-1 Adaptable Map Control

As is summarized in Fig. 3, the vibration-producing source corresponds to the engine E, a signal detecting unit corresponds to the pickup acceleration sensor s2 for detecting the actual amplitude Re_amp and the actual phase Re_pb and the current detector s3 for detecting the actual current Re_Im. The engine rotational frequency ω, the actual amplitude Re_amp, the actual phase Re_ph and the actual current Re_Im are respectively input to the map control unit C1 Likewise, other vehicle driving conditions such as, shift positions (D, N and R) and on-and-off states of the air-conditioning switch are input to the map control unit C1. In the map control unit C1, data maps, which have been stored at the data map memory unit C6, is employed.
As is obvious from Fig. 3, the map control unit C1 incorporates a deviation calculating section C11 and an output synthesis section C12. The deviation calculating section C11 calculates, on the basis of amplitude actually detected (the actual amplitude Re_amp and the actual current Re_Im), the actual phase Re_ph and an actual vehicle driving condition, a deviation Δ between the actual amplitude Re_amp and the specified appropriate control data MAP_amp, a deviation Δ denoted by ΔAMP; a deviation Δ between the actual current Re_Im and the specified appropriate control data MAP_Im, a deviation Δ denoted by ΔIm; and a deviation Δ between the actual phase Re_ph and the specified appropriate control data MAP_Im, a deviation Δ denoted by ΔPH. Taking into consideration the appropriate control data employed and the deviations Δ, the output synthesis section C12 calculates the modified appropriate control data (amp, ph and Im).
In the above-described process of obtaining deviations and calculating modified appropriate control data, when the vibrator 2 is subjected to the control data (amp, ph), in terms of voltage amplitude and phase of voltage, both the actual amplitude Re_amp and the actual phase Re_ph are employed in such a manner as to calculate the deviations ΔAMP and ΔPH, and as to modify the control data (amp, ph). On the other hand, when the vibrator 2 is subjected to the control data (Im, ph), in terms of current amplitude and phase of amplitude, only the actual phase Re_ph is employed. With regard to the control data Im, the actual current Re_Im is employed, which is supplied to the vibrator 2. Therefore, the deviations ΔIm and ΔPH can be calculated, and the control data (Im, ph) can be modified.
The modified, appropriate control data described above is obtained by modifying or compensating for, on the basis of the deviations, the appropriate control data determined solely from the data maps. In practical terms, the modified, appropriate control data is obtained, on the basis of data actually detected, by interpolating the plural data maps. Namely, according to the embodiments of the present invention, using the deviations in the course of implementing the adaptable map control preferably is tantamount to compensation for the adjustability that constitutes weakness of the conventional map control algorithm.

Output Form of Control Data

An action control data (amp, Im and ph) generated and synthesized at the output synthesis section C 12 is output to the vibrator 2 through the output processing unit C8. When the control device C sends a signal of a command in terms of electric current to the vibrator 2, an output form *y* of the action control data is determined by Formula (A) with "Im" as an electric current amplitude and "ph" as a phase thereof:

$$y = \text{Im} \times \sin(\omega n \times t + ph) \tag{A}$$

On the other hand, when the control device C sends a signal of a command in terms of voltage to the vibrator 2, an output form *y* of the action control data is determined by Formula (B) with "amp" as a voltage amplitude and "ph" as a phase:

$$y = amp \times \sin(\omega n \times t + ph) \tag{B}.$$

In the above Formulae (A) and (B), the variable $\omega n$ represents the specified frequency $\omega n$ specified at the frequency specifying unit C4, and the variable $t$ represents a period of time.

Deviation Calculating Section C11 and Output Synthesis Section C12

Operation of each of the deviation calculating section C11 and the output synthesis section C12 is explained below on the basis of an example in which the command signal is sent in terms of electric current from the control device C to the vibrator 2. Any action control data is expressed in the single form of (amplitude, phase). A time step is expressed by a variable "n". Suffixes such as "n+1" and "n+2" represent progression in time, while suffixes such as "n-1" and "n-2" represent retrogression in time. Any action control data without any such suffix corresponds to action control data at a current point in time.

a: Generation of a Synthesized Signal

Any synthesized signal is generated in accordance with the following four algorithm approaches: a first algorithm approach whereby appropriate control data and deviations are applied; a second algorithm approach whereby past values are applied; a third algorithm approach whereby the filter coefficient $\mu$ is set for each past value; and a fourth algorithm approach whereby an weighted mean of deviations is applied. In whichever algorithm approach, appropriate control data (MAP_Im, MAP_ph) is selected and specified in accordance with an actual vehicle driving condition, from among the data maps. A deviation $\Delta$ is obtained between the appropriate control data (MAP_Im, MAP_ph) and actual data (Re_Im, Re_ph) at the deviation calculating section C 11. At the output synthesis section C12, the modification filter coeffcient $\mu$ on the basis of the deviation is added into the appropriate control data (MAP_Im, MAP_ph), whereby obtaining the modified appropriate control data. This modified appropriate control data is applied as control data to be transmitted to the vibrator 2.

First Algorithm Approach

The control data (Im, ph) is obtained at the output synthesis section C12 by Formula (1):

$$\text{Current: } Im(n + 1) = MAP\_Im - \mu \times \Delta Im,$$

and

$$\text{Phase: } ph(n + 1) = MAP\_ph - \mu \times \Delta PH \tag{1}.$$

In the above Formula (1), the variable $\mu$ represents the modification filter coefficient. This modification filter coefficient $\mu$ is normally set at substantially 0.2 or less than that, as a non-limiting example. The deviations $\Delta Im$ and $\Delta PH$, which have been calculated at the deviation calculating section C11, are expressed by the following formulae:

$$\Delta Im = MAP\_Im\text{-}Re\_Im, \text{ and } \Delta PH = MAP\_ph - Re\_ph.$$

As described above, the current amplitude Im(n+1) and its phase ph(n+1) are generated by modifying the control data set and memorized in advance by the actually detected current and the actually detected phase. As a result, using a signal of command obtained as described above, a control can be performed with a control data modified, control data which had been specified from the vehicle driving condition. Thus, map control can attain adaptability.

The above-described algorithm approach is relatively simple and easy to implement, and yet the following algorithm approaches can be employed for the purpose of obtaining control data. The past values employed according to the second, third and fourth algorithm approaches have been stored at the actual data storage unit C7.

Second Algorithm Approach

The control data (Im, ph) is calculated at the output synthesis section C12 by Formula (2):

**EP 1 566 710 A1**

$$\text{Current: Im}(n+1) = MAP\_\text{Im} - \mu \times \Delta\text{Im}(n - 1) - \mu \times \Delta Im(n - 2) \cdots,$$

and

$$\text{Phase: } ph(n + 1) = MAP\_ ph - \mu \times \Delta PH(n - 1) - \mu \times \Delta PH(n - 2) \tag{2}.$$

The process of calculating the deviations at the deviation calculating section C11 is performed in the same manner as the first algorithm approach.

Third Algorithm Approach

The control data (Im, ph) is calculated at the output synthesis section C12 by Formula (3):

$$\text{Current: Im}(n + 1) = MAP\_ \text{Im} - \mu(n - 1) \times \Delta\text{Im}(n - 1) - \mu(n - 2) \times \Delta\text{Im}(n - 2)\cdots,$$

and

$$\text{Phase: } ph(n + 1) = MAP\_ ph - \mu(n - 1) \times \Delta PH(n - 1) - \mu(n - 2) \times \Delta PH(n - 2) \tag{3}.$$

The process of calculating the deviations at the deviation calculating section C11 is implemented in the same manner as the first algorithm approach. Each filter coefficient $\mu(n - 1)$, $\mu(n - 2) \cdots$ is set individually every time step n.

Fourth Algorithm Approach

The control data (Im, ph) is calculated at the output synthesis section C12 by Formula (4):

$$\text{Current: Im}(n + 1) = MAP\_\text{Im} - \{\mu \times \Delta\text{Im}(n - 1) + \mu \times \Delta Im(n - 2) \cdots\}/N,$$

and

$$\text{Phase: } ph(n + 1) = MAP\_ph - \{\mu \times \Delta PH(n - 1) + \mu \times \Delta PH(n - 2) \cdots\}/N \tag{4}.$$

The process of calculating the deviations at the deviation calculating section C11 is implemented in the same manner as the first algorithm approach. According to the fourth algorithm approach, the weighted mean of the deviations over the past N times is employed, whereby modifying the appropriate control data.
As described above, in order to perform the adaptable map control according to the embodiment of the present invention, action control data, which is generated by modifying appropriate control data by use of actually detected value, is employed as modified appropriate control data. In such circumstances, it is preferable that modifying appropriate control data be performed within a period of time required for a conventional map control, plus 10% of the period of time. Accordingly, the adaptable map control according to the embodiment of the present invention can be performed without damaging responsibility.

1-4-2 Adaptive Control

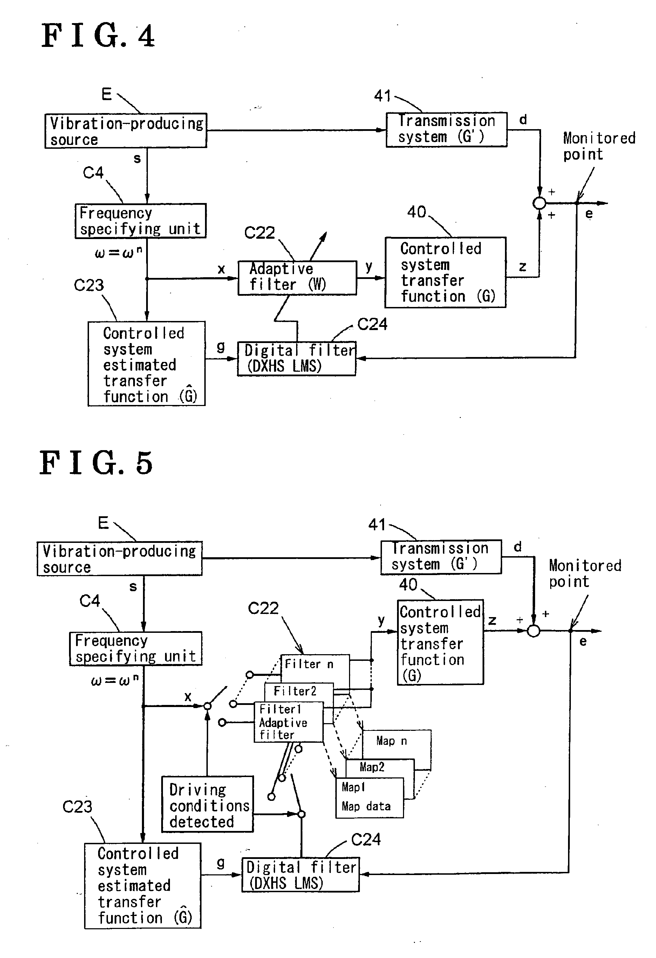

As is summarized in Fig. 4, the structures and functions of the vibration-producing source E and the frequency determining unit C4 are the same as those illustrated in Fig. 1.
A preferred method of performing the adaptive control according to the embodiment of the present invention employs a Delayed-X Harmonics Synthesizer Least-Mean-Square filter (hereinafter, referred to as a DXHS_LMS filter) algorithm approach.
In this control method, the frequency specifying unit C4 selects and specifies, on the basis of the engine rotational frequencies $\omega$, the specific frequency $\omega n$ to be controlled. The specific frequency $\omega n$ is input, in the form of a sine-wave input signal x, to an adaptive filter C22 from the frequency specifying unit C4. The adaptive filter C22 is

8

designed to have a filter coefficient for modifying amplitude and its phase of the input signal x. The input signal x is then synthesized at the adaptive filter C22 and is output in the form of a sine-wave output signal y. The output signal y passes through a transmission path 40 of the controlled system (i.e., the vibrator 2) possessing a transfer function G and is output in the form of a processed signal z.

In the meantime, vibration of the engine E is transmitted to a different transmission path 41 possessing a transfer function G' and is output in the form of an external force d, wherein a value generated by adding the external force d into the processed signal z is monitored at a monitoring point. A target monitored value at this monitoring point is zero. A difference between the target monitored value and the value on the basis of the processed signal z and the external force d is denoted by an error signal e. An estimated transfer function C23 of the controlled system (i.e., the vibrator 2) is expressed by an estimated value G. The filter coefficient of the adaptive filter C22 is updated, as appropriate, on the basis of the error signal e and the estimated value G, by use of a digital filter C24 which uses the DXLS_LMS algorithm approach.

Therefore, in the adaptive control according to the embodiment of the present invention, the updated filter coefficient of the adaptive filter C22 is employed as a parameter for specifying the control data, i.e., the output signal y, subjected to the vibrator 2 as the controlled object.

1-4-3 Synthesis of Data Map

As is summarized in Fig. 5, data maps employed during the adaptable map control are generated and set as described below.

According to the embodiment of the present invention, data maps are generated and set, as appropriate, in response to the vehicle driving condition at the time when data maps are generated and set, by the data map setting unit C5 while the adaptive control has been performed by the system 1. The number of data maps is determined in accordance with the types of vehicle driving conditions.

Fig. 5 explains an algorithm approach for generating and setting data maps by the system 1 during operation of the adaptive control. Fig. 5 corresponds to Fig. 4 in which the filter coefficient of the adaptive filter C22 is updated. As is obvious from Fig. 5, in the data map setting unit C5, an actual vehicle driving condition at the time when data maps are generated and set, can be specified, and the filter coefficient of the adaptive filter C22, which is updated during the adaptive control, is reflected on the data maps.

That is, when at least one of the shift position, the on-and-off state of the air-conditioning switch and the engine rotational frequency $\omega$ changes during performance of the adaptive control, the filter coefficient of the adaptive filter C22 is updated by the digital filter (DXHS LMS) C24. In such case, the filter coefficient of the adaptive filter C22 is updated in response to an actual vehicle driving condition. Therefore, the control data can be set and stored, in response to an actual vehicle driving condition, in the form of (amplitude, phase) corresponding to the updated filter coefficient of the adaptive filter C22.

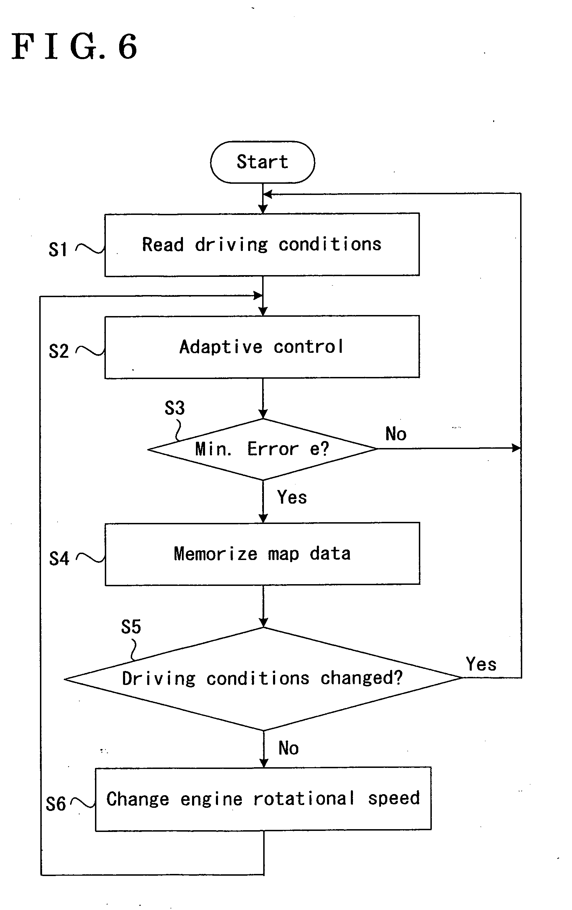

Fig. 6 is a flowchart for explaining a process for generating and setting data maps by the data map setting unit C5.

At step S1, the data map setting unit C5 reads an actual vehicle driving condition. At step S2, the data map setting unit C5 performs the adaptive control according to the embodiment of the present invention. At this point, factors referred to as the vehicle driving condition are any shift position (D/N/R) and any on-and-off state of the air-conditioning switch. At step S3, the data map setting unit C5 determines whether the value of the error signal e is the minimum value or within a predetermined allowable range. When an affirmative answer "Yes" is obtained at step S3, i.e., when the value of the error signal 2 is determined to be the minimum value or within the predetermined allowable range, the program proceeds to step S4, wherein the updated filter coefficient of the adaptive filter C22 is stored as control data plopped on a data map specified on the basis of the actual vehicle driving condition. In such case, the filter coefficient of the adaptive filter C22 is stored in the form of (voltage amplitude, phase) or (current amplitude, phase). On the other hand, when a negative answer "No" is obtained at step S3, the program returns to step S1, wherein the adaptive control is repeatedly performed.

At step S5, the data map setting unit C5 determines whether the vehicle driving condition (a shift position and an on-and-off state of the air-conditioning switch) has changed. When a negative answer "No" is obtained at step S5, i.e., when the vehicle driving conditions have not changed, the program proceeds to step S6, wherein the engine rotational frequency is changed. The program then returns to step S2 so as to perform the adaptive control. That is, the control data is acquired under the same vehicle driving conditions except for the engine rotational frequency.

On the other hand, when an affirmative answer "Yes" is obtained at step S5, i.e., when the vehicle deriving condition has changed, the program returns to step S1. As described above, according to the embodiment of the present invention, the adaptive control can be carried out, and at the same time, control data, which corresponds to an updated filter coefficient of the adaptive filter C22, is stored, during the adaptive control, under various vehicle driving conditions.

As a result, data maps utilized for the adaptable map control can be obtained by means of the adaptive control.

Relevant embodiments

In the embodiment described above, the adaptable map control was utilized for control in order for isolating vibration of an active mount. However, the control according to the embodiment of the present invention can be utilized in versatile applications, for example, in a field of a control technique relevant to vehicles, posture control such as ABS and VSC, entire field of active controls such as an active stabilizer, furthermore, in a field of a technique other than vehicles, posture control for a robot walking with two legs, entire fields of robots, control for isolating vibration relevant to architecture, and control for a wing of an airplane, or the like, relevant to aero-techniques.

According to an aspect of the present invention, a method of generating action control data includes an actuator (2) as a control object, a detector (s3) for detecting an actual measured data of an action signal in the actuator, and a data map including control data which can perform a preferable condition of control by activating the actuator. The method of generating action control data for activating the actuator in accordance with a driving condition of a vehicle appropriate at a time of controlling on the basis of an appropriate control data (MAP_amp, MAP_ph, MAP_Im) selected from the data map is characterized in that the method of generating action control data (amp, ph, Im) includes the steps of calculating (C11) a deviation between the appropriate control data and an actual measured data (Re_amp, Re_ph, Re_Im), modifying (C12) the appropriate control data on the basis of calculated deviation ($\Delta$AMP, $\Delta$PH, $\Delta$Im), and generating (C8) the modified appropriate control data as the action control data.

In this method, the appropriate control data obtained from the data map according to the driving condition of the vehicle at the time of controlling is modified, which is not performed in a conventional map control. In other words, in a process of calculating a deviation, a deviation between the actual measured data and the appropriate control data is calculated. Then, on the basis of the deviation, the appropriate control data is modified. The modified appropriate control data is converted into the action control data for transmitting to the actuator.

As a result, by use of the action control data, which is generated by modification on the basis of the deviation, adaptable control can be performed without damaging satisfactory responsiveness of the map control. For example, when appropriate control data is modified by the use of 10% value of deviation, the number of maps required for ensuring preferable control condition equivalent to that of the conventional map control becomes half or less than half of the number of maps required in the conventional map control. Thus, the adaptability is ensured.

According to a further aspect of the present invention, it is preferable that the method of generating action control data for isolating vibration of the vehicle including a vibration-producing source (E) includes a vibrator (2) provided at an active mount (3) for supporting the vibration-producing source as the actuator, and, as the detector, a vibration detector (s1) provided at a certain portion of the vehicle, or a current detector (s3) for detecting an current flowing in the vibrator, and the method of generating action control data for isolating vibration of the vehicle including a vibration-producing source includes steps of identifying (C4) a range of specific frequency for isolating the vehicle vibration based on a periodic signal generated from the vibration-producing source, selecting and determining the appropriate control data in the range of the specific frequency from the data map, and generating (C8) the modified appropriate control data.

In other words, the adaptable map control is applied to active isolation of vibration of vehicles. In this case, for the purpose of isolating vehicle vibration, the vibrator is provided at the active mount for supporting the vibration-producing source. For example, in case that the vibration source vibrate in a predetermined amplitude and phase, the vibrator adds vibration for canceling the vibration of the vibration-producing source, and thus for isolating the vibration of vehicle. In other words, the control data is used for controlling an action of the vibrator for isolating vibration of the vehicle in accordance with the driving condition of the vehicle (the rotational frequency of the engine, positions of a shift lever, on/off state of the air-conditioning switch). For obtaining the action control data, for example, actual vibration of a vehicle body portion under a seat is detected by the vibration detector. Then, a deviation between the actual vibration and the appropriate control data is calculated. Then, the appropriate control data is modified, and thus the action control data is generated. Here, vibration frequency range of a control object is identified to vibration frequency range, which is most efficient for controlling, on the basis of the periodic vibration of the vibration-producing source. By this, vibration of the vehicle having a vibration-producing source supported by an active mount can be controlled in satisfactory responsiveness and adaptability. As an effect of a structure according to the aspect of the present invention, a problem of adaptability of an active mount, which is generally shown at low temperature, was thus solved. Furthermore, as a factor for identifying the driving condition, a shift position can be exampled. In case of a conventional map control (no modification is performed), a map was required for each position of a shift lever such as forward, reverse, and neutral. On the contrary, in the method according to the aspect of the present invention, preparation of map on the basis of some positions, not all of positions of the shift lever, enables equivalent control as in the conventional map control.

According to a further aspect of the present invention, in the method of generating action control data for isolating vibration of the vehicle including a vibration-producing source, it is preferable that the control data be prepared in advance by activating the vibrator as the control object, and by performing an adaptive control for isolating the vibration of the vehicle caused by the vibration-producing source. The data map can be suitably generated by performing the adaptive control at the time of preparing the control data for each driving condition because control data that had performed the preferable control condition in the adaptive control is stored.

According to a further aspect of the present invention, it is preferable that a filter coefficient for the deviation be provided for performing the step of modifying, and the modified appropriate control data be obtained on the basis of the appropriate control data, the deviation, and the filter coefficient in the method of generating action control data. The modified appropriate control data can be obtained by calculating the deviation, by performing a filter process, which multiplies the filter coefficient by the deviation, and by easily generating modified value of the appropriate control data.

According to a further aspect of the present invention, it is preferable that the filter coefficient be variable. In case that the filter coefficient be variable, for example, preferable control can be performed.by use of the filter coefficient appropriate to the driving condition at a time of performing the modification.

According to a further aspect of the present invention, in the method of generating action control data for isolating vibration of the vehicle including a vibration-producing source, it is preferable that the filter coefficient be set at a finite number of 0.2 or less in order for modifying the appropriate control data, and the appropriate control data be modified on the basis of multiplication of the deviation and the filter coefficient in the step of modifying the appropriate control data. Even when the filter coefficient is 0.2 or less, an intention for performing modification can be achieved while the appropriate control data is sufficiently utilized. The map control having satisfactory responsiveness can be performed by calculating modified value with simple equation including multiplication to the deviation without losing the satisfactory responsiveness.

According to a further aspect of the present invention, the control data for the actuator is generated in terms of amplitude and phase of a voltage, or in terms of amplitude and phase of current in the method of generating action control data. The control data for the actuator can be generated in terms of either voltage, or current. In case of voltage, for example, the control according to the aspect of the present invention can be performed by use of the voltage output of the vibration detector and the control data memorized in terms of voltage data. In case of current, for example, considering a phase of the voltage output of the vibration detector as a phase of actual vibrations, and considering an amplitude of the control current as an actual amplitude of the actual vibrations, the control according to the aspect of the present invention can be performed by use of the control data memorized in terms of current data. In case of current control, in accordance with changes of temperature and changes with the passage of time described above, superior level of adaptability can be ensured.

According to a further aspect of the present invention, by utilizing a responsiveness of a map control, and by supplementing a drawback of the map control robustness, in particular, lack of robustness, satisfactory performance in isolation of vibration was achieved. Then, for a active vibration isolating control system, in case the control method is utilized, because assumed value is not used in calculations, an error from the actual measured value is not generated. Thus, satisfactory performance in isolation of vibration can be obtained. Because the appropriate control data, which enables to perform preferable control for the driving condition, is slightly modified by reference of the actual detected value, satisfactory performance in isolation of vibration can be obtained without losing satisfactory responsiveness. Because a deviation between the optimum value and the actual measured value is calculated, the deviation can be canceled in case where a deviation be generated between the value optimized in past, which becomes not optimum value with passage of time, or the like, and the actual measured value. Further, in case where a deviation be calculated, and modification be performed by use of the deviation, the filter coefficient, if provided, can be set or changed for adjusting the amount of the modification. Thus, the satisfactory control can be easily performed.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

**Claims**

1.  A method of generating action control data, comprising:

    an actuator (2) as a control object;
    a detector (s3) for detecting an actual measured data of an action signal in the actuator; and

a data map including control data which can perform a preferable condition of control by activating the actuator; the method of generating action control data for activating the actuator in accordance with a driving condition appropriate at a time of controlling on the basis of an appropriate control data (MAP_amp, MAP_ph, MAP_Im) selected from the data map

**characterized in that**
the method of generating action control data (amp, ph, Im) includes the steps of calculating (C11) a deviation between the appropriate control data and an actual measured data (Re_amp, Re_ph, Re_Im), modifying (C12) the appropriate control data on the basis of calculated deviation ($\Delta$AMP, $\Delta$PH, $\Delta$Im), and generating (C8) the modified appropriate control data as the action control data.

2. The method of generating action control data for isolating vibration of the vehicle including a vibration-producing source (E) according to claim 1, wherein
the method of generating action control data for isolating vibration of the vehicle including a vibration-producing source includes
a vibrator (2) provided at an active mount (3) for supporting the vibration-producing source as the actuator, and a vibration detector (s1) provided at a certain portion of the vehicle, or a current detector (s3) for detecting an current flowing in the vibrator, as the detector,
and the method of generating action control data for isolating vibration of the vehicle including a vibration-producing source includes steps of
identifying (C4) a range of specific frequency for isolating the vehicle vibration based on a periodic signal generated from the vibration-producing source,
selecting and determining the appropriate control data in the range of the specific frequency from the data map, and generating (C8) the modified appropriate control data.

3. The method of generating action control data for isolating vibration of the vehicle including a vibration-producing source according to claim 2, wherein
the control data is prepared in advance by activating the vibrator as the control object, and by performing an adaptive control for isolating the vibration of the vehicle caused by the vibration-producing source.

4. The method of generating action control data according to any one of the preceding claims, wherein a filter coefficient $\mu$ for the deviation is provided for performing the step of modifying, and the modified appropriate control data is obtained on the basis of the appropriate control data, the deviation, and the filter coefficient.

5. The method of generating action control data for isolating vibration of the vehicle including a vibration-producing source according to claim 4, wherein
the filter coefficient is variable.

6. The method of generating action control data for isolating vibration of the vehicle including a vibration-producing source according to claim 4, wherein
in the step of modifying the appropriate control data, the filter coefficient is set at a finite number of 0.2 or less in order for modifying the appropriate control data, and the appropriate control data is modified on the basis of multiplication of the deviation and the filter coefficient.

7. The method of generating action control data according to any one of the preceding claims, wherein the control data for the actuator is generated in terms of amplitude and phase of a voltage, or in terms of amplitude and phase of current.

8. An adaptable map control method for activating the actuator by use of the action control data generated by the method of action control data according to any one of the preceding claims.

9. The method of generating action control data according to any one of the preceding claims, wherein the detector for detecting the actual measured data includes the detector for detecting the amplitude, a rotational detector for detecting a rotational frequency of an engine, an acceleration sensor for detecting a degree of acceleration applied to a seat, and a current detector for detecting current flowing in a vibrator.

10. The method of generating action control data according to claim 9, wherein the actual measured data includes a shift position (D, N, R) of a transmission and a state of an air-conditioning switch (ON, OFF).

EP 1 566 710 A1

# F I G. 1

# F I G. 2

# F I G. 3

# F I G. 4

# F I G. 5

EP 1 566 710 A1

# FIG. 6

```
            ┌─────────┐
            │  Start  │
            └────┬────┘
                 │
     ┌───────────┴──────────────┐
 S1 ─┤  Read driving conditions  │
     └───────────┬──────────────┘
                 │
     ┌───────────┴──────────────┐
 S2 ─┤     Adaptive control      │
     └───────────┬──────────────┘
                 │
         S3      │
            ╱─────┴─────╲           No
           ╱ Min. Error e? ╲ ──────────▶
            ╲─────┬─────╱
                  │ Yes
     ┌────────────┴─────────────┐
 S4 ─┤    Memorize map data     │
     └────────────┬─────────────┘
                  │
         S5       │
            ╱──────┴──────╲          Yes
           ╱ Driving conditions changed? ╲ ──────▶
            ╲──────┬──────╱
                   │ No
     ┌─────────────┴──────────────────┐
 S6 ─┤ Change engine rotational speed  │
     └────────────────────────────────┘
```

16

European Patent
Office

**EUROPEAN SEARCH REPORT**

Application Number

EP 05 00 3392

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 931 285 A (MADSEN ET AL) 3 August 1999 (1999-08-03) * abstract * * column 7, line 36 - column 8, line 50; figures 5,6b * ----- | 1,7 | G05B13/04 G05D19/02 |
| X | US 5 439 204 A (YAMAZOE ET AL) 8 August 1995 (1995-08-08) * abstract * * column 7, line 3 - column 17, line 62; figures 1-7,11 * ----- | 1-3,9 | |
| A | US 2001/053951 A1 (GOTO KATSUHIRO ET AL) 20 December 2001 (2001-12-20) * abstract; figures 1,2,4 * ----- | 1 | |
| A | US 5 647 579 A (SATOH ET AL) 15 July 1997 (1997-07-15) * abstract * ----- | 1 | |
| A | US 6 120 012 A (SHIBATA ET AL) 19 September 2000 (2000-09-19) * abstract * ----- | 1 | TECHNICAL FIELDS SEARCHED (Int.Cl.7) G05B G05D |

The present search report has been drawn up for all claims

| Place of search | Date of completion of the search | Examiner |
|---|---|---|
| Munich | 23 May 2005 | Helot, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                              
& : member of the same patent family, corresponding document

EPO FORM 1503 03.82 (P04C01)

**ANNEX TO THE EUROPEAN SEARCH REPORT**
**ON EUROPEAN PATENT APPLICATION NO.**     EP 05 00 3392

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2005

| Patent document cited in search report | | Publication date | Patent family member(s) | | Publication date |
|---|---|---|---|---|---|
| US 5931285 | A | 03-08-1999 | AT | 177853 T | 15-04-1999 |
| | | | AU | 4431996 A | 14-08-1996 |
| | | | CA | 2210397 A1 | 01-08-1996 |
| | | | DE | 29623652 U1 | 29-07-1999 |
| | | | DE | 69601783 D1 | 22-04-1999 |
| | | | DE | 69601783 T2 | 02-12-1999 |
| | | | WO | 9623248 A1 | 01-08-1996 |
| | | | DK | 805999 T3 | 11-10-1999 |
| | | | EP | 0805999 A1 | 12-11-1997 |
| | | | ES | 2130779 T3 | 01-07-1999 |
| | | | JP | 10513586 T | 22-12-1998 |
| US 5439204 | A | 08-08-1995 | JP | 6330980 A | 29-11-1994 |
| | | | JP | 7042783 A | 10-02-1995 |
| | | | JP | 7042784 A | 10-02-1995 |
| | | | DE | 4417101 A1 | 24-11-1994 |
| | | | GB | 2278180 A ,B | 23-11-1994 |
| US 2001053951 | A1 | 20-12-2001 | JP | 2002005227 A | 09-01-2002 |
| US 5647579 | A | 15-07-1997 | JP | 3430699 B2 | 28-07-2003 |
| | | | JP | 8270723 A | 15-10-1996 |
| | | | DE | 19612677 A1 | 28-11-1996 |
| US 6120012 | A | 19-09-2000 | JP | 9317814 A | 12-12-1997 |
| | | | JP | 2858401 B2 | 17-02-1999 |
| | | | JP | 10148234 A | 02-06-1998 |
| | | | DE | 19719352 A1 | 13-11-1997 |

For more details about this annex : see Official Journal of the European Patent Office, No. 12/82